Europäisches Patentamt

European Patent Office

Office européen des brevets

(11) Veröffentlichungsnummer: **0 280 865**
**A1**

(12) **EUROPÄISCHE PATENTANMELDUNG**

(21) Anmeldenummer: **88100918.7**

(22) Anmeldetag: **22.01.88**

(51) Int. Cl.⁴: **G05D 23/19** , B60H 1/00 ,
G05B 13/02

(30) Priorität: **05.03.87 DE 3707079**

(43) Veröffentlichungstag der Anmeldung:
**07.09.88 Patentblatt 88/36**

(84) Benannte Vertragsstaaten:
**FR GB IT SE**

(71) Anmelder: **Hella KG Hueck & Co.**
**Postfach 28 40**
**D-4780 Lippstadt(DE)**

(72) Erfinder: **Knittel, Otto, Dipl.-Ing.**
**Grabbeweg 3**
**D-4770 Soest(DE)**

(54) **Vorrichtung zum Regeln der Innenraumtemperatur.**

(57) Bei einer Vorrichtung zum Regeln der Innenraumtemperatur mit einem Solltemperaturgeber, mit einem Innenraumtemperaturfühler, mit einem Subtrahierer, der die Differenz des Ausgangssignals des Innenraumtemperaturfühlers und des Ausgangssignals des Solltemperaturgebers bildet, mit einem Proportionalregler und mit einem Integralregler, denen parallel das Ausgangssignal des Subtrahierers zugeführt wird und mit einem Addierer, der die Ausgangssignale von Proportionalregler und Integralregler addiert und dessen Ausgangssignal ein Stellglied zum Beeinflussen der dem Innenraum zugeführten Wärmemenge steuert, ist zur Vermeidung von Komfortbeeinträchtigungen und Behaglichkeitseinbußen in den zu temperierenden Räumen eine Bewertungsstufe vorgesehen, die das Ausgangssignal des Subtrahierers empfängt und deren Ausgangssignal die Wirkung des Proportionalreglers beeinflußt.

FIG 1

EP 0 280 865 A1

## Vorrichtung zum Regeln der Innenraumtemperatur

Die Erfindung betrifft eine Vorrichtung zum Regeln der Innenraumtemperatur, insbesondere eines Kraftfahrzeuges, mit einem Solltemperaturgeber, mit einem Innenraumtemperaturfühler, mit einem Subtrahierer, der die Differenz des Ausgangssignals des Solltemperaturgebers bildet, mit einem Proportionalregler und einem Integralregler, denen parallel das Ausgangssignal des Subtrahierers zugeführt wird und mit einem Addierer, der die Ausgangssignale von Proportionalregler und Integralregler addiert und dessen Ausgangssignal ein Stellglied zum Beeinflussen der dem Innenraum zugeführten Wärmemenge steuert.

Eine derartige Vorrichtung ist aus der DE-OS 32 15 293 vorbekannt. Dort werden ein Proportionalregler und ein Integralregler verwendet, deren Wirkung auf den Regelkreis und damit auf das Stellglied zum Beeinflussen der dem Innenraum zugeführten Wärmemenge konstant und unabhängig von den Eingangsgrößen ist.

Diese vorbekannte Vorrichtung hat jedoch Nachteile. Der parallelgeschaltete Proportionalregler bewirkt eine langdauernde Regelabweichung der Innenraumtemperatur von der Solltemperatur im eingeregelten Zustand des Reglers. Das heißt, die voreingestellte Solltemperatur wird im allgemeinen nicht von der gemessenen Innenraumtemperatur erreicht. Es ist dem Bediener z. B. des Kraftfahrzeuges häufig nicht möglich, seine gewünschte Temperatur genau voreinzustellen. Dies kann zu Einbußen an Behaglichkeit und Komfort beim Aufenthalt in dem zu temperierenden Innenraum führen.

Um diesen Nachteil zu verringern, ist es möglich, die Wirkung des Integralreglers gegenüber der Wirkung des Proportionalreglers höher zu bewerten. Eine derartige konstante Höherbewertung hat jedoch den Nachteil, daß bei großen Abweichungen der Solltemperatur von der Innenraumtemperatur zum Beispiel aufgrund einer sprunghaften Änderung der Solltemperatur oder beim Kaltstart eines Kraftfahrzeuges im Winter sehr heiße oder sehr kalte Luft in den zu temperierenden Innenraum eingeblasen wird. Dies kann insbesondere im Kraftfahrzeug, in dem häufig die Ausblasöffnungen der Kraftfahrzeugheizung sehr nah an Körperteilen von Fahrzeuginsassen angeordnet sind, zu erheblichen Beeinträchtigungen der Behaglichkeit und zu Komforteinbußen führen.

Anpassungen der vorbekannten Vorrichtung an andere Innenräume, insbesondere von Kraftfahrzeugen, sind teuer und kostenaufwendig, weil z. B. durch zeit-und kostenaufwendige Meßreihen die möglichen und zulässigen konstanten Wirkungen der Regler ermittelt werden müssen.

Die Erfindung hat die Aufgabe, die vorbekannte Vorrichtung dahingehend zu verbessern, daß auf einfache und kostengünstige Weise Komfortbeeinträchtigungen und Behaglichkeitseinbußen in den zu temperierenden Räumen vermieden werden.

Diese Aufgabe wird dadurch gelöst, daß eine Bewertungsstufe vorgesehen ist, die das Ausgangssignal des Subtrahierers empfängt und deren Ausgangssignal die Wirkung des Proportionalreglers beeinflußt.

Dabei empfängt die Bewertungsstufe das gleiche Ausgangssignal, das als Eingangssignal dem Proportionalregler und dem Integralregler zugeführt wird. Das heißt, die Eingangsgröße der ersten Bewertungsstufe ist die Abweichung der voreingestellten Solltemperatur von der gemessenen Innenraumtemperatur. Abhängig von dieser Abweichung ist erfindungsgemäß die Wirkung des Proportionalreglers auf das Stellglied der Vorrichtung veränderbar.

Die erfindungsgemäße Vorrichtung hat den Vorteil, daß durch die betriebsabhängige Veränderung der Wirkung des Proportionalreglers auf das Stellglied eine bleibende Regelabweichung, die beim Vorbekannten kaum vollständig zu vermeiden ist, vermieden werden kann.

Bei der erfindungsgemäßen Vorrichtung ist keine konstante Höherbewertung der Wirkung des Integralreglers gegenüber der Wirkung des Proportionalreglers erforderlich, weil das Verhältnis der Wirkungen der Regler betriebsabhängig veränderbar ist. Dadurch können zu hohe oder zu niedrige Temperaturen der in den Innenraum ausgeblasenen Luft vermieden werden. Diese erfindungsgemäßen Vorteile können zu einem erheblichen Komfortgewinn insbesondere in Kraftfahrzeugen und zu einem erheblichen Zugewinn an Behaglichkeit führen.

Die erfindungsgemäße Vorrichtung ist gegenüber dem Vorbekannten einfacher und kostengünstiger herstellbar, weil zur Anpassung der erfindungsgemäßen Vorrichtung an unterschiedliche zu temperierende Innenräume insbesondere von unterschiedlichen Kraftfahrzeugen keine zeit-und kostenaufwendigen Meßreihen zum Bestimmen der zulässigen Wirkungen der Regler erforderlich sind.

Weitere vorteilhafte Ausgestaltungen und Weiterbildungen des Erfindungsgegenstands ergeben sich aus den Unteransprüchen.

Es ist vorteilhaft, wenn die Bewertungsstufe einen ersten Kennlinienspeicher aufweist. Durch Vorsehen eines Kennlinienspeichers, der eine Kennlinie bzw. eine Funktionsvorschrift aufweist, ist es möglich, die Wirkung des Proportionalreglers praktisch beliebig abhängig von der Differenz von Solltemperatur und Innenraumtemperatur zu ändern.

Man kann als erste Kennlinie des ersten Kennlinienspeichers eine Ursprungsgerade vorsehen, so daß bei dem Nichtvorhandensein einer Abweichung der Solltemperatur von der Innenraumtemperatur die Wirkung des Proportionalreglers verschwindet. Dadurch kann sichergestellt werden, daß eine bleibende Regelabweichung nicht auftritt. Die Steigung der Geraden ist abhängig z. B. von den Eigenschaften des zu temperierenden Innenraumes frei wählbar.

Es ist besonders vorteilhaft, eine zweite Bewertungsstufe vorzusehen, die das Ausgangssignal des Subtrahierers empfängt und deren Ausgangssignal die Wirkung des Integralreglers beeinflußt, weil durch diese Maßnahme auch die Wirkung des Integralreglers auf die Vorrichtung abhängig von der Differenz von Solltemperatur und Innenraumtemperatur änderbar ist. Dadurch kann die Gesamtwirkung beider Regler der Vorrichtung und damit der gesamten erfindungsgemäßen Vorrichtung nahezu beliebig verändert werden.

Aus den gleichen Gründen wie bei der ersten Bewertungsstufe ist es vorteilhaft, wenn die zweite Bewertungsstufe einen zweiten Kennlinienspeicher aufweist.

In diesem Zusammenhang ist es besonders vorteilhaft, die Kennlinien komplementär zueinander gekrümmt auszubilden, um die Gesamtwirkung bzw. die Gesamtverstärkung der Vorrichtung unabhängig von der Differenz von Solltemperatur und Innenraumtemperatur konstant zu halten. Dadurch ist eine nahezu beliebige Anpassung der Wirkungen von Proportionalregler und Integralregler möglich.

Einen vorteilhaften Sonderfall stellt die Möglichkeit dar, daß die erste Kennlinie eine progressive Krümmung aufweist und/oder daß die zweite Kennlinie eine degressive Krümmung aufweist, wenn die Solltemperatur größer als die Innenraumtemperatur ist und daß die erste Kennlinie degressive Krümmung aufweist und/oder daß die zweite Kennlinie progressive Krümmung aufweist, wenn die Solltemperatur kleiner als die Innenraumtemperatur ist. Dadurch kann erreicht werden, daß bei großen Abweichungen der Solltemperatur von der Innenraumtemperatur die Wirkung des Proportionalreglers groß ist gegenüber der Wirkung des Integralreglers. Das heißt, es kann ein komfortbeeinträchtigendes Ausblasen von zu warmer oder zu kalter Luft in den Innenraum vorteilhaft vermieden werden. Bei geringer werdender Abweichung der Solltemperatur von der Innenraumtemperatur ist die Wirkung des Integralreglers groß gegenüber der Wirkung des Proportionalreglers, so daß eine komfortbeeinträchtigende bleibende Regelabweichung besonders wirkungsvoll vermieden wird. Ist eine Abweichung der Solltemperatur von der Innenraumtemperatur nicht vorhanden, so ist der Proportionalregler wirkungslos, da seine Wirkung verschwindet.

Um eine schnelle Reaktion des konstruktionsbedingt langsamen Integralreglers auf Änderungen der Abweichung der Solltemperatur von der Innenraumtemperatur zu ermöglichen, ist es vorteilhaft, zwischen dem Integralregler und dem Subtrahierer einen ersten Proportionaldifferenzialregler oder Proportionalregler anzuordnen.

Es ist besonders vorteilhaft, einen Umgebungstemperaturfühler vorzusehen, dessen Ausgangssignal einem zweiten Subtrahierer zuführbar ist, wobei der zweite Subtrahierer das Ausgangssignal des Umgebungstemperaturfühlers vom Ausgangssignal des ersten Subtrahierers subtrahiert und wobei das Ausgangssignal des zweiten Subtrahierers parallel dem Proportionalregler und dem Integralregler zuführbar ist. So können Änderungen des im wesentlichen durch die Umgebungstemperatur in der Umgebung des Innenraumes bestimmten Wärmebedarfs, die im allgemeinen erst mit einer großen Zeitverzögerung zu einer Änderung der Innenraumtemperatur führen, durch die erfindungsgemäße Vorrichtung schneller erfaßt werden. Weiterhin kann durch diese Maßnahme vorteilhaft eine Veränderung der Solltemperatur abhängig von der Umgebungstemperatur, d. h. eine sogenannte Physiologieanpassung durchgeführt werden.

Es ist weiterhin insbesondere bei Vorrichtungen, deren Stellglied einen anderen Wärmeträger steuert als die eingeblasene Luft, z. B. bei wasserseitig geregelten Kraftfahrzeugheizungen, vorteilhaft, einen Ausblastemperaturfühler vorzusehen, dessen Ausgangssignal einem zweiten Proportionaldifferenzialregler oder Proportionalregler zuführbar ist und einen dritten Subtrahierer vorzusehen, der das Ausgangssignal des Ausblastemperaturfühlers vom Ausgangssignal des Addierers subtrahiert und dessen Ausgangssignal das Stellglied steuert. Dadurch werden Änderungen der Ausblastemperatur der in den Innenraum ausgeblasenen Luft, die erst nach einer Zeitverzögerung zu einer meßbaren Änderung der Innenraumtemperatur führen und die z. B. auf Änderungen des Wärmeangebots der mechanischen Teile der Heizvorrichtung beruhen können, schnell erfaßt, so daß eine schnelle Reaktion der Vorrichtung auf die geänderten thermischen Verhältnisse möglich ist.

In diesem Zusammenhang ist besonders vorteilhaft, zwischen dem Stellglied und dem dritten Subtrahierer einen dritten Proportionaldifferenzialregler oder Proportionalregler anzuordnen, um eine schnelle Reaktion der Vorrichtung auf Änderungen der Ausblastemperatur zu ermöglichen.

Man kann vorteilhaft den Integralregler und/oder den Proportionalregler und/oder die Proportionaldifferenzialregler und/oder die Bewertungsstufen und/oder die Subtrahierer und/oder den Addierer und/oder das Verzögerungsglied als Teil eines Mikrorechners ausbilden, weil so der Aufwand zum Aufbau der erfindungsgemäßen Vorrichtung weiter vermindert werden kann.

Ausführungsbeispiele des Erfindungsgegenstandes sind in den Zeichnungen dargestellt und werden im folgenden anhand der Zeichnungen näher erläutert.

Es zeigen

Figur 1 ein erstes Ausführungsbeispiel der erfindungsgemäßen Vorrichtung,

Figur 2 ein zweites Ausführungsbeispiel der erfindungsgemäßen Vorrichtung mit einem Umgebungstemperaturfühler und

Figur 3 ein drittes Ausführungsbeispiel der erfindungsgemäßen Vorrichtung mit einem Ausblastemperaturfühler.

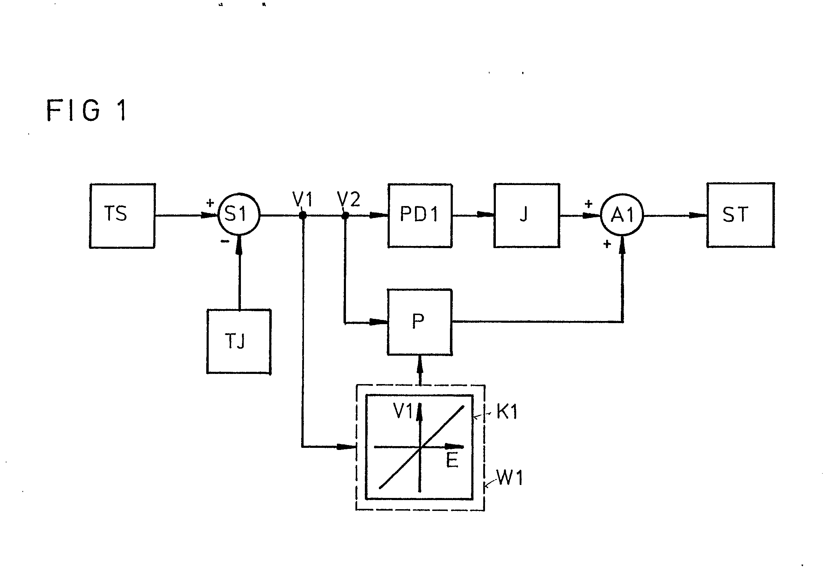

In der Figur 1 sind ein Solltemperaturgeber (TS) und ein Innenraumtemperaturfühler (TI) mit einem Subtrahierer (S1) leitend verbunden. Der Subtrahierer (S1) bildet die Differenz der Ausgangssignale des Solltemperaturgebers (TS) und des Innenraumtemperaturfühlers (TI), indem er das Ausgangssignal des Innenraumtemperaturfühlers (TI) vom Ausgangssignal des Solltemperaturgebers (TS) subtrahiert.

Das Ausgangssignal (E) des Subtrahierers (S1) wird über eine erste Signalverzweigung (V1) parallel den Reglern (P, I) und einer Bewertungsstufe (W1) zugeführt. Weiterhin wird das Ausgangssignal (E) des Subtrahierers (S1) über eine zweite Signalverzweigung (V2) parallel dem Integralregler (I) und dem Proportionalregler (P) zugeführt. Um eine schnelle Reaktion des konstruktionsbedingt langsamen Integralreglers (I) auf Änderungen der Differenz von Solltemperatur und Innenraumtemperatur zu ermöglichen, ist dem Integralregler (I) ein erster Proportionaldifferenzialregler (PD1) vorgeschaltet. Die Ausgangssignale des Integralreglers (I) und des Proportionalreglers (P) werden in einem Addierer (A1) addiert, dessen Ausgangssignal ein Stellglied (ST) zum Beeinflussen der dem Innenraum zugeführten Wärmemenge steuert. Der Innenraum, der hier als Kraftfahrzeuginnenraum ausgebildet sein soll, ist in den Figuren nicht dargestellt.

Die erste Bewertungsstufe (W1) beeinflußt abhängig vom Ausgangssignal (E) des Subtrahierers (S1) die Wirkung oder Verstärkung des Proportionalreglers (P). Die erste Bewertungsstufe (W1) weist dazu einen Kennlinienspeicher (K1) auf. Der Kennlinienspeicher (K1) weist eine Kennlinie auf, die eine Funktionsvorschrift festlegt, nach der der vom Subtrahierer (S1) gebildete Wert (E) im Kennlinienspeicher (K1) umgewandelt wird in eine Ausgangsgröße (V1), die ein Maß für die Verstärkung des Proportionalreglers (P) ist.

In der Figur 1 weist der erste Kennlinienspeicher (K1) eine Kennlinie auf, die als Ursprungsgerade ausgebildet ist.

Die erfindungsgemäße Vorrichtung nach der Figur 1 funktioniert folgendermaßen:

Es sei angenommen, daß sich die Vorrichtung im statischen, d. h. eingeregeltem Zustand befindet. Das heißt, die voreingestellte Solltemperatur entspricht der gemessenen Innenraumtemperatur, so daß das Ausgangssignal (E) des ersten Subtrahierers (S1) verschwindet. Der Integralregler (I) und der Proportionaldifferenzialregler (PD1) sind dann mit ihren vorgegebenen konstanten Wirkungen wirksam. Sie üben jedoch keinen Regeleingriff auf das Stellglied (ST) aus, weil keine Abweichung zwischen der Solltemperatur und der Innenraumtemperatur vorliegt.

Aus dem gleichen Grund liefert der Subtrahierer (S1) dem ersten Kennlinienspeicher (K1) der ersten Bewertungsstufe (W1) ein Signal (E) mit dem Wert 0. Da es sich bei der im ersten Kennlinienspeicher (K1) abgelegten Kennlinie um eine Ursprungsgerade handelt, liefert der Kennlinienspeicher (K1) ebenfalls den Wert (V1) 0 an den Proportionalregler (P), so daß in diesem Zustand der Proportionalregler (P) keine Wirkung auf die Verstellung des Stellglieds (ST) hat.

Wird nun z. B. durch Vorgabe einer neuen Solltemperatur das Ausgangssignal des Solltemperaturgebers (TS) verändert, so liefert der erste Subtrahierer (S1) an die Regler (I, P) und die erste Bewertungsstufe (W1) einen Wert (E), der vom Wert 0 verschieden ist. Dieser vom Wert 0 verschiedene Wert (E) führt zu einer von der festeingestellten Wirkung bzw. Verstärkung des Integralreglers (I) und des ersten Proportionaldifferenzialreglers (PD1) abhängigen Stelleingriff des Stellgliedes (ST). Zugleich findet ein Regeleingriff des parallel geschalteten Proportionalreglers (P) statt, weil nunmehr aufgrund des Vorhandenseins einer von 0 verschiedenen Differenz der Solltemperatur von der Innenraumtemperatur dessen Wirkung oder Verstärkung (V1) ebenfalls ungleich 0 ist.

Die Größe der Wirkung oder Verstärkung (V1) des Proportionalreglers (P) wird dabei durch die Größe der Abweichung der Solltemperatur von der Innenraumtemperatur bestimmt, denn diese Abweichung wird dem ersten Kennlinienspeicher (K1) der ersten Bewertungsstufe (W1) geliefert. Der vorgegebenen Abweichung (E) entspricht eindeutig ein Funktionswert der im ersten Kennlinienspeicher (K1) abgelegten Funktion. die im vorliegenden Beispiel eine Geradengleichung ist. Der so ermittelte Funktionswert (V1) wird dem Proportionalregler (P) zugeführt und bestimmt die Wirkung oder Verstärkung des Proportionalreglers.

Im vorliegenden Fall, in dem die Kennlinie des ersten Kennlinienspeichers (K1) eine Ursprungsgerade ist, ist die Wirkung oder Verstärkung (V1) des Proportionalreglers (P) direkt proportional der Abweichung (E) der voreingestellten Solltemperatur von der gemessenen Innenraumtemperatur. Das heißt, je größer die Abweichung (E) der Solltemperatur von der Innenraumtemperatur ist, umso größer ist die Wirkung des Proportionalreglers (P) und umso stärker wird die Steuerung des Stellglieds (ST) durch den Proportionalregler bestimmt. Dadurch wird bei großen Abweichungen der Solltemperatur von der Innenraumtemperatur ein Einblasen von zu heißer oder zu kalter Luft in den Kraftfahrzeuginnenraum vermieden. Bei geringen Abweichungen der Solltemperatur von der Innenraumtemperatur ist die Wirkung des Proportionalreglers (P), verglichen mit der festeingestellten Wirkung des Integralreglers (I), entsprechend geringer. Bei Gleichheit von Solltemperatur und Innenraumtemperatur verschwindet die Wirkung des Proportionalreglers (P) vollständig, so daß eine bleibende Regelabweichung der Solltemperatur von der Innenraumtemperatur aufgrund der Wirkung des Proportionalreglers (P) sicher vermieden wird.

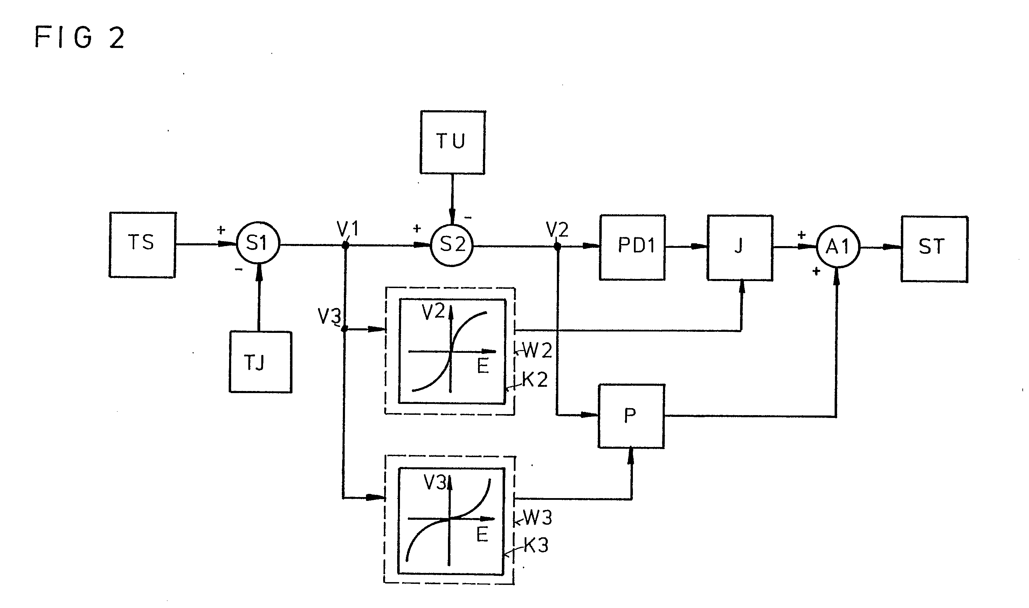

In der Figur 2 sind gleiche und gleichwirkende Teile wie in der Figur 1 mit den gleichen Bezugszeichen wie in der Figur 1 versehen. Hier ist jedoch zur Steuerung der Wirkung des Proportionalreglers (P) eine dritte Bewertungsstufe (W3) vorgesehen, die sich von der ersten Bewertungsstufe (W1) nach der Figur 1 dadurch unterscheidet, daß ein anderer Kennlinienspeicher vorgesehen ist. Der dritte Kennlinienspeicher (K3) der dritten Bewertungsstufe (W3) weist eine Kennlinie auf, die als stetige Kurve mit progressiver Krümmung ausgebildet ist, wenn die Solltemperatur größer ist als die Innenraumtemperatur und die eine degressive Krümmung aufweist, wenn die Solltemperatur kleiner ist als die Innenraumtemperatur.

Parallel zur dritten Bewertungsstufe (W3) ist eine zweite Bewertungsstufe (W2) angeordnet, die als Eingangssignal (E) ebenfalls das Ausgangssignal des ersten Subtrahierers (S1) empfängt. Diese zweite Bewertungsstufe weist ebenfalls einen zweiten Kennlinienspeicher (K2) auf. Der zweite Kennlinienspeicher (K2) weist eine von der Kennlinie des dritten Kennlinienspeichers (K3) abweichende Kennlinie auf, die im Ausführungsbeispiel der Figur 2 als degressiv gekrümmte Kurve ausgebildet ist, wenn die Solltemperatur größer als die Innenraumtemperatur ist, wogegen die Kurve progressiv gekrümmt ist, wenn die Solltemperatur kleiner als die Innenraumtemperatur ist. Die Kennlinien des zweiten Kennlinienspeichers (K2) und des dritten Kennlinienspeichers (K3) sind also komplementär zueinander gekrümmt. Die zweite Bewertungsstufe (W2) beeinflußt hier die Wirkung bzw. Verstärkung des Integralreglers (I).

Weiterhin weist die erfindungsgemäße Vorrichtung nach der Figur 2 einen Umgebungstemperatur-oder Außentemperaturfühler (TA) auf, dessen Ausgangssignal einem zweiten Subtrahierer (S2) zugeführt wird, der die Differenz des Ausgangssignals des ersten Subtrahierers (S1) und des Ausgangssignals des Umgebungstemperaturfühlers (TU) bildet und dessen Ausgangssignal parallel über die zweite Signalverzweigung (V2) dem Integralregler (I) und dem Proportionalregler (P) als Eingangssignal zugeführt wird.

Bei der erfindungsgemäßen Vorrichtung nach der Figur 2 werden also die zweite Bewertungsstufe (W2) und die dritte Bewertungsstufe (W3) über die erste Signalverzweigung (V1) und die dritte Signalverzweigung (V3) mit der Differenz der voreingestellten Solltemperatur und der gemessenen Innenraumtemperatur beaufschlagt. Der Integralregler (I) und der Proportionalregler (P) werden dagegen mit einem Signal beaufschlagt, das sich durch Subtraktion der Innenraumtemperatur und der Umgebungstemperatur vom voreingestellten Sollwert ergibt.

Die erfindungsgemäße Vorrichtung nach der Figur 2 funktioniert folgendermaßen:

Im Falle der Gleichheit von Solltemperatur und Innenraumtemperatur ist die Wirkung oder die Verstärkung (V2, V3) beider Regler (I, P) aufgrund der in den Bewertungsstufen (W2, W3) bzw. deren Kennlinienspeichern (K2, K3) gespeicherten Kennlinien gleich Null, so daß keine Umsteuerung der Lage des Stellgliedes (ST) erfolgt. Dies ist auch dann der Fall, wenn sich eine Änderung der Umgebungstemperatur, gemessen durch den Umgebungstemperaturfühler (TU), einstellen würde.

Liegt eine Abweichung der Solltemperatur von der Innenraumtemperatur vor, so sind die Wirkungen des Integralreglers (I) und des Proportionalreglers (P) durch die Größe der Abweichung (E) bestimmt. Bei einer großen Abweichung (E) der Solltemperatur von der Innenraumtemperatur ist die Wirkung (V3) des Proportionalreglers (P), verglichen mit der Wirkung (V2) des Integralreglers (I), größer, so daß sich die im Ausführungsbeispiel nach der Figur 1 genannten Vorteile ergeben. Bei einer kleinen Abweichung (E) der Solltemperatur von der Innenraumtemperatur ist die Wirkung (V2) des Integralreglers (I) gegenüber der Wirkung (V3) des Proportionalreglers (P) groß, so daß sich auch hier die im Ausführungsbeispiel der erfindungsgemäßen Vorrichtung nach der Figur 1 genannten Vorteile ergeben.

Zusätzlich ist durch die komplementäre Krümmung der Kennlinien der Kennlinienspeicher (K2, K3) in den Bewertungsstufen (W2, W3) sichergestellt, daß die Gesamtverstärkung der erfindungsgemäßen Vorrichtung nach der Figur 2 unabhängig von der Abweichung (E) der Solltemperatur von der Innenraumtemperatur und von der Größe der Abweichung (E) konstant ist.

Weiterhin können im Falle des Vorliegens einer Abweichung der Solltemperatur von der Innenraumtemperatur Schwankungen der Umgebungs-oder Außentemperatur über den Umgebungstemperaturfühler (TU) und den zweiten Subtrahierer (S2) die Wirkung der erfindungsgemäßen Vorrichtung beeinflussen. Dadurch ist es möglich, daß die erfindungsgemäße Vorrichtung schneller auf Änderungen des Wärmebedarfs, der im wesentlichen von der Umgebungstemperatur abhängig ist, reagieren kann. Bis eine Änderung der Umgebungstemperatur zu einer Änderung der Innenraumtemperatur im zum temperierenden Innenraum führt, vergehen häufig mehrere Minuten, so daß durch die vorteilhafte Maßnahme des Umgebungstemperaturfühlers (TU) eine schnellere Reaktion der erfindungsgemäßen Vorrichtung auf Änderungen der Umgebungstemperatur möglich ist.

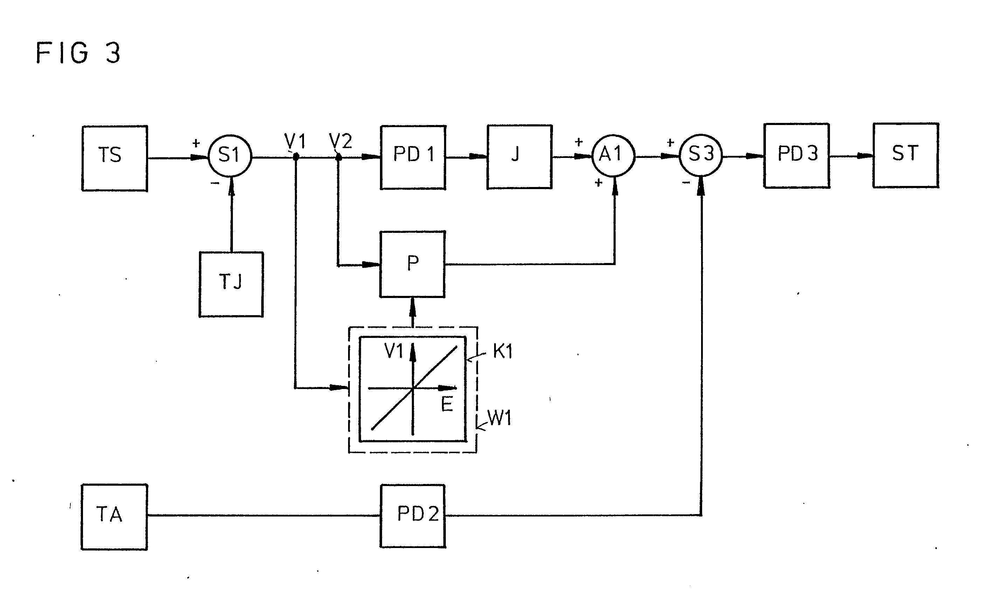

In der Figur 3 sind gleiche oder gleichwirkende Teile wie in der Figur 1 mit den gleichen Bezugszeichen versehen. Im Ausführungsbeispiel nach der Figur 3 ist zusätzlich ein Ausblastemperaturfühler (TA) vorgesehen, dessen Ausgangssignal einem zweiten Proportionaldifferenzialregler (PD2) als Eingangsgröße zugeleitet wird, dessen Ausgangssignal einem dritten Subtrahierer (S3) zugeleitet wird.

Der dritte Subtrahierer (S3) ist zwischen dem Addierer (A1) und dem Stellglied (ST) angeordnet. Zusätzlich ist zwischen dem Stellglied (ST) und dem dritten Subtrahierer (S3) ein dritter Proportionaldifferenzialregler (PD3) vorgesehen. Der dritte Subtrahierer (S3) subtrahiert das Ausgangssignal des zweiten Proportionaldifferenzialreglers (PD2) vom Ausgangssignal des Addierers (A1).

Das Ausführungsbeispiel der erfindungsgemäßen Vorrichtung nach der Figur 3 funktioniert folgendermaßen:

Bei konstanter Ausblastemperatur, d. h. wenn der Ausblastemperaturfühler ein konstantes Ausgangssignal liefert, funktioniert die erfindungsgemäße Vorrichtung nach der Figur 3 genauso wie die erfindungsgemäße Vorrichtung nach der Figur 1. Ändert sich jedoch die gemessene Ausblastemperatur z. B. deshalb, weil das Wärmemengenangebot der mechanischen Teile der Heiz-oder Kühleinrichtung sich ändert, so wird diese Änderung der Ausblastemperatur durch den zweiten Proportionaldifferenzialregler (PD2), ggf. in ihrem Wert geändert, weitergeleitet an den dritten Subtrahierer (S3).

Ist diese Änderung der Ausblastemperatur von längerer Dauer, so führt dies zu einer Änderung der Stellung des Stellgliedes (ST) zum Beeinflussen der dem Innenraum zugeführten Wärmemenge um das geänderte Wärmeangebot, z. B. der mechanischen Teile der Heizeinrichtung, zu kompensieren. Diese Funktion des Ausblastemperaturfühlers (TA) des zweiten Proportionaldifferenzialreglers (PK2) ist ständig wirksam und unabhängig davon, ob eine von Null verschiedene Differenz zwischen der Solltemperatur und der Innenraumtemperatur vorliegt.

Der Proportionaldifferenzialregler (PD2) soll eine Reaktion der erfindungsgemäßen Vorrichtung auf schnelle Änderungen der Ausblastemperatur ermöglichen. Der dritte Proportionaldifferenzialregler (PD3) dient ebenfalls zur Beschleunigung der Reaktion der erfindungsgemäßen Vorrichtung.

Wie aus der Beschreibung der Ausführungsbeispiele der erfindungsgemäßen Vorrichtung hervorgeht, ist die erfindungsgemäße Vorrichtung weitgehend anpassungsfähig. Dies ermöglicht die Anpassung an fast beliebige Erfordernisse von Innenräumen. Die erfindungsgemäße Vorrichtung ist also insbesondere für Kraftfahrzeuginnenräume gut geeignet, jedoch auch für andere zu temperierende Innenräume vorteilhaft brauchbar.

## Ansprüche

1. Vorrichtung zum Regeln der Innenraumtemperatur, insbesondere eines Kraftfahrzeuges, mit einem Solltemperaturgeber, mit einem Innenraumtemperaturfühler, mit einem Subtrahierer, der die Differenz des Ausgangssignals des Innenraumtemperaturfühlers und des Ausgangssignals des Solltemperaturgebers bildet, mit einem Proportionalregler und mit einem Integralregler, denen parall das Ausgangssignal des Subtrahierers zugeführt wird und mit einem Addierer, der die Ausgangssignale vom Proportionalregler und Integralregler addiert und dessen Ausgangssignal ein Stellglied zum Beeinflussen der dem Innenraum zugeführten Wärmemenge steuert, dadurch gekennzeichnet, daß eine Bewertungsstufe (W1, W3) vorgesehen ist, die das Ausgangssignal des Subtrahierers (S1) empfängt und deren Ausgangssignal die Wirkung des Proportionalreglers (P) beeinflußt.

2. Vorrichtung nach Anspruch 1, dadurch gekennzeichnet, daß die Bewertungsstufe (W1, W3) einen Kennlinienspeicher (K1, K3) aufweist.

3. Vorrichtung nach Anspruch 2, dadurch gekennzeichnet, daß die Kennlinie des Kennlinienspeichers (K1) eine Ursprungsgerade ist.

4. Vorrichtung nach Anspruch 1, dadurch gekennzeichnet, daß eine zweite Bewertungsstufe (W2) vorgesehen ist, die das Ausgangssignal des Subtrahierers (S1) empfängt und deren Ausgangssignal die Wirkung des Integralreglers (I) beeinflußt.

5. Vorrichtung nach Anspruch 4, dadurch gekennzeichnet, daß die zweite Bewertungsstufe (W2) einen zweiten Kennlinienspeicher (K2) aufweist.

6. Vorrichtung nach Anspruch 2 und Anspruch 5, dadurch gekennzeichnet, daß die Kennlinien der Kennlinienspeicher (K2, K3) komplementär zueinander gekrümmt sind.

7. Vorrichtung nach Anspruch 6, dadurch gekennzeichnet, daß die erste Kennlinie (K3) progressive Krümmung aufweist und/oder daß die zweite Kennlinie (K2) degressive Krümmung aufweist, wenn die Solltemperatur größer als die Innenraumtemperatur ist und daß die erste Kennlinie (K3) degressive Krümmung aufweist und/oder daß die zweite Kennlinie (K2) progressive Krümmung aufweist, wenn die Solltemperatur kleiner als die Innenraumtemperatur ist.

8. Vorrichtung nach Anspruch 1, dadurch gekennzeichnet, daß zwischen dem Integralregler (I) und dem Subtrahierer (S1) ein erster Proportionaldifferenzialregler (PD1) oder ein Proportionalregler angeordnet ist.

9. Vorrichtung nach Anspruch 1, dadurch gekennzeichnet, daß ein Umgebungstemperaturfühler (TU) vorgesehen ist, dessen Ausgangssignal einem zweiten Subtrahierer (S2) zuführbar ist, daß der zweite Subtrahierer (S2) das Ausgangssignal des Umgebungstemperaturfühlers (TU) vom Ausgangssignal des ersten Subtrahierers subtrahiert und daß das Ausgangssignal des zweiten Subtrahierers (S2) parallel dem Proportionalregler (P) und dem Integralregler (I) zuführbar ist.

10. Vorrichtung nach Anspruch 1, dadurch gekennzeichnet, daß ein Ausblastemperaturfühler (TA) vorgesehen ist, dessen Ausgangssignal einem zweiten Proportionaldifferenzialregler (PD2) oder Proportionalregler zuführbar ist und daß ein dritter Subtrahierer (S3) vorgesehen ist, der das Ausgangssignal des Ausblastemperaturfühlers (TA) vom Ausgangssignal des Addierers (A1) subtrahiert und dessen Ausgangssignal das Stellglied (ST) steuert.

11. Vorrichtung nach Anspruch 10, dadurch gekennzeichnet, daß zwischen dem Stellglied (ST) und dem dritten Subtrahierer (S3) ein dritter Proportionaldifferenzialregler (PD3) oder Proportionalregler angeordnet ist.

12. Vorrichtung nach einem oder mehreren der vorhergehenden Ansprüche, dadurch gekennzeichnet, daß der Integralregler (I) und/oder der Proportionalregler (P) und/oder die Proportionaldifferenzialregler (PD1, PD2, PD3) und/oder die Bewertungsstufen (W1, W2, W3) und/oder die Subtrahierer (S1, S2, S3) und/oder der Addierer (A1) und/oder das Verzögerungsglied (VZ) als Teil eines Mikrorechners ausgebildet sind.

FIG 1

0 280 865

# FIG 2

0 280 865

# FIG 3

0 280 865

| | Europäisches Patentamt | **EUROPÄISCHER RECHERCHENBERICHT** | Nummer der Anmeldung |
|---|---|---|---|
| | Patentamt | | EP 88 10 0918 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 215 293 (MITSUBISHI) <br> * Seite 4, Zeile 1 - Seite 8, Zeile 16; Figuren 1-4; Ansprüche 1,2 * <br> --- | 1,4,12 | G 05 D 23/19 <br> B 60 H 1/00 <br> G 05 B 13/02 |
| Y | PATENT ABSTRACTS OF JAPAN, Band 10, Nr. 368 (M-543)[2425] 9. Dezember 1986; JP - A - 61 163 012 (NIPPON DENSO) 23.07.1986 <br> --- | 1,4,12 | |
| P,A | US-A-4 673 031 (WIEMER) <br> * Spalte 1, Zeile 5; Spalte 2; Zeile 1; Spalte 2, Zeile 46 - Spalte 3, Zeile 39; Spalte 6, Zeilen 22-56; Anspruch 1; Figuren 1,2,4 * <br> --- | 1,2 | |
| A | DE-B-1 673 601 (SIEMENS) <br> * Spalte 1, Zeile 48 - Spalte 2, Zeile 16; Spalte 2, Zeile 43 - Spalte 3, Zeile 45; Figur 1 * <br> --- | 1,2 | |
| A | PATENT ABSTRACTS OF JAPAN, Band 10, Nr. 290 (P-503)[2346] 2. Oktober 1986; & JP - A - 61 109 104 (SHIMADZU) 27.05.1986 <br> ----- | 1,2 | **RECHERCHIERTE SACHGEBIETE (Int. Cl.4)** <br><br> B 60 H <br> G 05 D <br> G 05 B |

Der vorliegende Recherchenbericht wurde für alle Patentansprüche erstellt

| Recherchenort | Abschlußdatum der Recherche | Prüfer |
|---|---|---|
| BERLIN | 03-06-1988 | BEITNER M.J.J.B. |